**Europäisches Patentamt**

(19) **European Patent Office**

**Office européen des brevets**

(11) Veröffentlichungsnummer: **0 044 913**
**B1**

(12) **EUROPÄISCHE PATENTSCHRIFT**

(45) Veröffentlichungstag der Patentschrift:
**01.02.84**

(21) Anmeldenummer: **81103883.5**

(22) Anmeldetag: **20.05.81**

(51) Int. Cl.³: **H 01 R 31/08, H 04 Q 1/14**

(54) Steckeinrichtung zum Prüfen einer Kabelader gegenüber allen übrigen Kabeladern in einem Kontaktelement.

(30) Priorität: **30.07.80 DE 3028895**

(43) Veröffentlichungstag der Anmeldung:
**03.02.82 Patentblatt 82/5**

(45) Bekanntmachung des Hinweises auf die Patenterteilung:
**01.02.84 Patentblatt 84/5**

(84) Benannte Vertragsstaaten:
**AT BE CH FR IT LI LU NL SE**

(56) Entgegenhaltungen:
**DE - A - 1 465 785**
**DE - A - 1 537 628**
**DE - A - 1 810 175**
**DE - A - 1 948 545**
**DE - A - 2 433 314**
**DE - B - 1 223 913**
**GB - A - 2 017 428**

**TELEFON REPORT 9, 1973, Heft 4, Seiten 139-149**
**München, DE., P. NOLKE et al.: "Der**
**Mini-Hauptverteiler"**

(73) Patentinhaber: **KRONE GmbH, Goerzallee 311,**
**D-1000 Berlin 37 (DE)**

(72) Erfinder: **Herfort, Hermann, Achenseeweg 75,**
**D-1000 Berlin 45 (DE)**
Erfinder: **Hegner, Gunter, Waidmannsluster Damm 62,**
**D-1000 Berlin 27 (DE)**

(74) Vertreter: **Patentanwälte Beetz sen. - Beetz jun. Timpe -**
**Siegfried - Schmitt-Fumian et al, Steinsdorfstrasse 10,**
**D-8000 München 22 (DE)**

Steckeinrichtung zum Prüfen einer Kabelader gegenüber allen übrigen
Kabeladern in einem Kontaktelement

Die Erfindung betrifft eine Steckeinrichtung zum Prüfen einer Kabelader gegenüber allen übrigen Kabeladern in einem Kontaktelement.

Es besteht oft die Forderung, innerhalb eines Kontaktelementes eine Kabelader gegenüber allen übrigen Kabeladern zu prüfen.

Der Erfindung liegt die Aufgabe zugrunde, eine Prüfeinrichtung in Form einer Steckeinrichtung zu konstruieren, die es erlaubt, immer wieder vorkommende Prüfaufgaben zu lösen.

Diese Aufgabe wird bei einer Steckeinrichtung der eingangs genannten Art erfindungsgemäß dadurch gelöst, daß in der Steckeinrichtung, die aus einem Steckeroberteil und einem Steckerunterteil besteht, Elemente, die in ihrem unteren Bereich Steckerzungen und in ihrem oberen Bereich Kontaktfedern in dem Kontaktelement entsprechender Anzahl besitzen, angeordnet sind, wobei bei den Kontaktfedern der Kontakt gegen eine Metallschiene anliegt und einen zur Aufnahme eines Abgreifsteckers geeigneten Trennkontakt bildet.

Ausgestaltungen der Erfindung sind in den Unteransprüchen gekennzeichnet.

Durch die neue Anordnung wird ein wesentlicher erfindungsbestimmender Vorteil erreicht, indem die zu prüfende Ader abgreifbar und über eine Meßschnur an ein Meßinstrument führbar ist. Alle übrigen Kabeladern lassen sich auf ein gemeinsames Potential legen.

Abgreifstecker, die beim Kontaktelement Verwendung finden, können auch bei der Steckeinrichtung verwendet werden.

Die Erfindung wird anhand des in der Zeichnung dargestellten Ausführungsbeispiels näher erläutert. Es zeigt

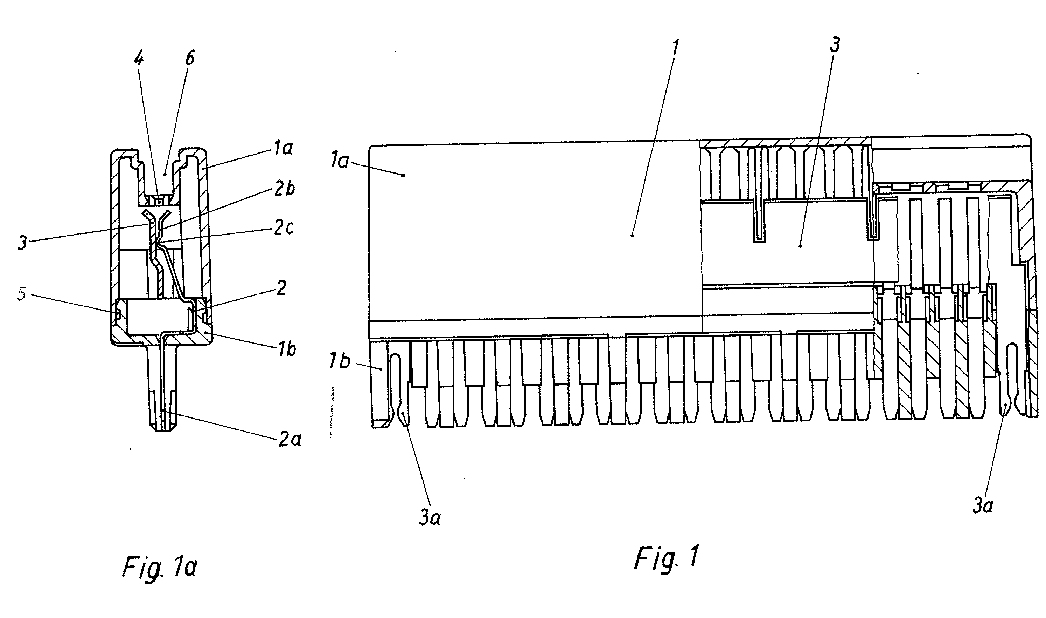

Fig. 1 die Steckeinrichtung nach der Erfindung in der Vorderansicht und

Fig. 1a die Seitenansicht nach Fig. 1 im Schnitt.

Wie die Fig. 1 zeigt, sind in der Steckeinrichtung 1 in dem Kontaktelement entsprechender Anzahl im aus Kunststoff bestehenden Steckerunterteil 1b Steckerzungen 2a gelagert. Diese werden in die Steckeröffnung des (nicht dargestellten) Kontaktelementes gesteckt.

Wie die Fig. 1a zeigt, sind die Elemente 2 im oberen Bereich als Kontaktfeder 2b ausgebildet, wobei der Kontaktpunkt 2c gegen eine Metallschiene 3 anliegt.

Die Kontaktfedern 2b bilden somit gemeinsam mit der Metallschiene 3, die an ihren Enden je eine Klemmfeder 3a aufweist, die bei gesteckter Steckeinrichtung 1 eine elektrische Verbindung mit der aus Metall bestehenden (nicht dargestellten) Aufnahmewanne herstellt und damit alle Adern auf das Potential dieser Aufnahmewanne schaltet, einen Trennkontakt.

Die Steckeinrichtung 1 ist aus dem Steckeroberteil 1a und dem Steckerunterteil 1b aufgebaut, wobei beide Teile 1a, 1b über eine sich in Längsrichtung erstreckende Schnappeinrichtung 5 verbunden sind.

Der obere Bereich 6 des Steckeroberteiles 1a ist wie der Oberteil des Kontaktelementes ausgebildet und kann einen für das Kontaktelement üblichen Abgreifstecker aufnehmen.

Beim Stecken dieses Steckers, der mit einer für diese Prüfung zweckmäßig angeschlossenen Prüfschnur versehen ist, wird die entsprechende Ader vom gemeinsamen Potential getrennt und über die Prüfschnur herausgeführt.

## Patentansprüche

1. Steckeinrichtung zum Prüfen einer Kabelader gegenüber allen übrigen Kabeladern in einem Kontaktelement, dadurch gekennzeichnet, daß in der Steckeinrichtung (1), die aus einem Steckeroberteil (1a) und einem Steckerunterteil (1b) besteht, Elemente (2), die in ihrem unteren Bereich Steckerzungen (2a) und in ihrem oberen Bereich Kontaktfedern (2b) in dem Kontaktelement entsprechender Anzahl besitzen, angeordnet sind, wobei bei den Kontaktfedern (2b) der Kontaktpunkt (2c) gegen eine Metallschiene (3) anliegt und einen zur Aufnahme eines Abgreifsteckers geeigneten Trennkontakt bildet.

2. Steckeinrichtung nach Anspruch 1, dadurch gekennzeichnet, daß an den Enden der Metallschiene (3) je eine Klemmfeder (3a) angeordnet ist, die bei gesteckter Steckeinrichtung eine elektrische Verbindung zu einer Aufnahmeeinrichtung für die Steckeinrichtung herstellt.

3. Steckeinrichtung nach Anspruch 1, dadurch gekennzeichnet, daß der auf den Steckerunterteil (1b) gesteckte Steckeroberteil (1a) eine Öffnung (4) aufweist, durch die ein Abgreifstecker einführbar ist.

4. Steckeinrichtung nach Anspruch 1, dadurch gekennzeichnet, daß der Steckeroberteil (1a) und der Steckerunterteil (1b) über eine sich in Längsrichtung erstreckende Schnappeinrichtung (5) befestigt sind.

## Claims

1. A pluggable device for testing one cable conductor with respect to all the other cable conductors within a contact element, characterized in that inside the pluggable device (1), which is formed of a connector top member (1a) and a connector bottom member (1b), elements (2) are disposed which are formed in their lower region with contact tabs (2a) and in their upper region with contact springs (2b) of a number corresponding to the contact element, wherein the contact point (2c) of the contact springs (2b) engages a metal rail (3) and forms a break contact suitable for receiving a test plug.

2. A pluggable device as claimed in claim 1, characterized in that a clip (3a) is respectively provided at the ends of the metal rail (3) which clip, when the pluggable device is plugged in, makes an electrical connection with a receiving means for the pluggable device.

3. A pluggable device as claimed in claim 1, characterized in that the connector top portion (1a), which is plugged onto the connector lower portion (1b), is formed with an aperture (4) through which a test plug may be inserted.

4. A pluggable device as claimed in claim 1, characterized in that the connector top portion (1a) and the connector lower portion (1b) are mounted by means of a longitudinally extending snap means (5).

**Revendications**

1. Dispositif à enficher en vue de contrôler un conducteur de câble vis-à-vis de tous les autres conducteurs d'un élément de contact, caractérisé en ce que, dans le dispositif à enficher (1) qui est constitué d'une partie supérieure (1a) et d'une partie inférieure (1b), on installe des éléments (2) comportant, dans la parttie inférieure, des languettes d'enfichage (2a) et, dans la partie supérieure, des ressorts de contact (2b) en un nombre qui est fonction de l'élément de contact et, dans les ressorts de contact (2b), le point de contact (2c) vient se placer contre un rail métallique (3) en formant un contact séparable approprié pour recevoir une fiche de prise.

2. Dispositif à enficher suivant la revendication 1, caractérisé en ce que, aux extrémités du rail métallique (3), on prévoit chaque fois un ressort de serrage (3a) qui, lorsque le dispositif est enfiché, établit un raccordement électrique avec un dispositif destiné à recevoir le dispositif à enficher.

3. Dispositif à enficher suivant la revendication 1, caractérisé en ce que la partie supérieure (1a) enfichée dans la partie inférieure (1b), comporte une ouverture (4) par laquelle on peut introduire une fiche.

4. Dispositif à enficher suivant la revendication 1, caractérisé en ce que la partie supérieure (1a) et la partie inférieure (1b) sont fixées à l'intervention d'un dispositif à déclic (5) s'étendant dans le sens longitudinal.

Fig. 1a

Fig. 1

0 044 913